# FASCICULE DE BREVET EUROPEEN

(11) **EP 0 757 585 B1**
(45) Date de publication et mention de la délivrance du brevet: **11.06.2003**
(21) Numéro de dépôt: 95942765.9
(22) Date de dépôt: 18.12.1995
(51) Int. Cl.: B01D 53/88, B01D 53/86, F23G 7/06

(54) **DISPOSITIF ROTATIF D'EPURATION CATALYTIQUE D'EFFLUENTS GAZEUX POLLUES**
DREHBARE VORRICHTUNG ZUR KATALYTISCHEN REINIGUNG VON VERUNREINIGTEN ABGASEN
ROTARY DEVICE FOR THE CATALYTIC PURIFICATION OF CONTAMINATED GAS EFFLUENTS

(30) Priorité: 26.12.1994 FR 9415740
(43) Date de publication de la demande: 12.02.1997
(73) Titulaire: INSTITUT FRANCAIS DU PETROLE, 92500 Rueil Malmaison (FR); Bourcier, Jacques, 44600 Saint-Nazaire (FR)
(72) Inventeur: BOURCIER, Jacques, F-44600 Saint-Nazaire (FR); MORLEC, Jean, F-44600 Saint-Nazaire (FR)
(86) Numéro de dépôt international: FR9501692
(87) Numéro de publication internationale: WO96020039

(56) Documents cités:
- EP-A- 0 365 262
- WO-A-93/11857
- WO-A-94/23246
- US-A- 3 870 474

## Description

L'invention concerne un dispositif rotatif perfectionné de transfert pour des effluents gazeux et un procédé correspondant, adapté à fonctionner comme échangeur de chaleur et comme épurateur à effet thermique et/ou catalytique.

L'invention trouve des applications notamment dans les systèmes d'échange de chaleur ou adaptés à purifier de l'air chargé de substances telles que des composés organiques volatils (C.O.V), qui peuvent être oxydées et éliminées par incinération thermique ou catalytique.

Par le document WO 94/23246 on connaît un dispositif d'épuration d'effluents gazeux comportant à tambour tournant chargé avec des blocs d'un matériau réfractaire tel que de la céramique. Les effluents à traiter sont dirigés vers la partie centrale du tambour où les substances polluantes sont incinérées par la chaleur issue d'un brûleur disposé dans l'axe du tambour. Les effluents épurés sont canalisés à travers un secteur angulaire opposé au premier et servent à réchauffer la masse de matériau réfractaire.

Par le brevet EP 365 262, on connaît un dispositif d'épuration d'effluents gazeux comprenant une colonne de dépollution verticale comportant deux étages mixtes superposés constitués chacun d'une couche d'un matériau d'échange thermique poreux (billes de céramique) et d'une couche d'un catalyseur d'oxydation. Entre les deux étages, se trouve une chambre dans laquelle débouche l'orifice d'un brûleur. Les effluents pollués sont canalisés alternativement par des conduites munies de vannes vers le sommet de la colonne ou vers sa base. Ils traversent les deux étages et dans la chambre centrale entre les étages, ils sont éventuellement réchauffés au moyen du brûleur. Périodiquement le sens de passage au travers des deux étages est inversé.

Par la demande de brevet 94/06.282 du demandeur, on connaît un dispositif d'échange thermique et d'épuration par effet thermique et/ou catalytique de gaz pollués tels que des C.O.V. Il comporte une enveloppe ou cage, une couronne contenant une charge de matériaux solides particulièrement choisis du fait qu'ils présentent une grande surface d'échange thermique (silice, granit ou matériaux plus légers tels que structures alvéolaires métalliques ou autres, ou encore nodules cryogéniques pour les températures négatives, etc) qui est disposée à l'intérieur de la cage dans toute sa profondeur. La couronne est divisée en plusieurs parties par un cloisonnement intérieur ou bien selon les cas, elle sert de support à un certain nombre de paniers. Des moyens moteurs sont utilisés pour animer la couronne et la cage d'un mouvement de rotation l'une relativement à l'autre autour d'un axe vertical (soit que la couronne tourne, la cage étant fixe, soit que la couronne au contraire est fixe et la cage tourne autour d'elle).

Le dispositif antérieur comporte un conduit pour l'introduction d'effluents dans la cage et un conduit pour l'évacuation d'effluents hors de la cage. La couronne comporte un premier secteur pour faire communiquer à tout instant le conduit d'introduction avec la partie centrale de la cage, où s'effectue un premier transfert de chaleur entre les effluents et la charge dans la couronne. Par un deuxième secteur de la couronne, où s'effectue un deuxième transfert de chaleur entre des effluents et la charge dans la couronne, la partie centrale de la cage communique à tout instant avec le conduit d'évacuation.

Ce dispositif antérieur peut être utilisé seulement comme échangeur de chaleur simple ou pour un emploi mixte d'échangeur de chaleur et d'incinérateur pour effluents pollués. Dans ce cas, le conduit d'introduction reçoit des effluents contenant des substances polluantes. Le premier secteur et le deuxième secteur communiquent directement l'un avec l'autre par l'intermédiaire de la partie centrale de la cage. Un réacteur thermique pourvu éventuellement d'un lit catalytique choisi pour provoquer une réaction exothermique en présence des substances polluantes, est disposé dans cette partie centrale pour brûler les substances polluantes dans les effluents canalisés par la première zone angulaire.

Avec cet agencement, la couronne tourne entre deux parties fixes: le réacteur central et l'enveloppe. Pour empêcher les fuites par contournement du réacteur de la zone centrale, il est nécessaire de prévoir une double étanchéité annulaire. On l'obtient en imposant des tolérances serrées de forme et de concentricité ttant au stade de la fabrication qu'à celui du montage.

Le dispositif rotatif d'épuration catalytique d'effluents gazeux pollués selon l'invention, comporte une enveloppe ou cage, une couronne disposée à l'intérieur de la cage, et des moyens moteurs pour animer la couronne d'un mouvement de rotation continu relativement à la cage autour d'un axe vertical, au moins un conduit pour l'introduction d'effluents dans la cage et au moins un conduit pour l'évacuation d'effluents hors de la cage, la couronne comportant au moins une premier secteur pour faire communiquer à tout instant le conduit d'introduction avec la partie centrale de la cage, et au moins un deuxième secteur de la couronne pour faire communiquer à tout instant la partie centrale de la cage avec les circuits d'évacuation et un réacteur d'épuration catalytique pour brûler les substances polluantes mêlées aux effluents canalisés par la première zone angulaire.

Le dispositif est caractérisé en ce qu'il comporte en combinaison au moins un lit catalytique annulaire disposé dans la partie intérieure de la couronne sur tout son pourtour et une charge d'un matériau présentant une grande surface d'échange thermique disposée dans la couronne extérieurement au lit catalytique.

Avec cet agencement, les effluents pollués (éventuellement préchauffés dans un échangeur extérieur) après s'être réchauffés au contact de la masse thermique dans la partie extérieure du premier secteur angulaire de la couronne, sont épurés en traversant une première fois le lit catalytique annulaire tapissant la paroi intérieure de la couronne. Ils traversent une deuxième fois le lit de l'autre côté de la partie centrale, avant de céder une partie de la chaleur acquise par l'incinération catalytique, à la masse thermique dans le deuxième secteur angulaire de la couronne avant leur évacuation.

Cette disposition de la masse à grande surface d'échange thermique et du catalyseur dans la partie tournante du dispositif permet de diminuer la masse et le volume de la couronne ce qui simplifier la conception; elle facilite aussi le montage et abaisse les coûts de fabrication et de maintenance.

La couronne étant à l'intérieur de la cage, deux paliers suffisent pour maintenir son axe et encaisser les efforts. Pour l'entraîner en rotation, on peut utiliser des moyens moteurs extérieurs suffisamment éloignés des zones les plus chaudes, et les installer sur le dessus du dispositif, ce qui permet de diminuer son encombrement en hauteur.

L'épaisseur du lit catalytique est choisie suffisante pour que les gaz pollués soient épurés après leurs deux passages successifs au travers du lit catalytique, de part et d'autre de la partie centrale.

Le réacteur thermique comporte de préférence des moyens de chauffage communiquant avec la zone centrale de la couronne, tels qu'un brûleur disposé dans un conduit d'amenée d'effluents frais débouchant dans la zone centrale de la couronne ou bien d'un brûleur disposé extérieurement à la couronne au-dessus de sa zone centrale et associé dans ce cas, de préférence, à des moyens d'injection dans une zone intermédiaire entre les zones d'introduction et d'évacuation d'un flux de gaz frais de régulation de température.

Avec cette combinaison de moyens de refroidissement et de réchauffage des effluents, on peut facilement réguler la température d'incinération quand elle varie en raison de la variation du taux de substances polluantes dans les effluents.

Cette adjonction d'un brûleur est le plus souvent nécessaire au démarrage si les gaz pollués introduits ne sont pas assez chauds ou si le taux de C.O.V dans les gaz n'est pas suffisant à l'auto-entretien de la réaction exothermique dans le réacteur.

Suivant un mode de réalisation, la couronne est excentrée à l'intérieur de la cage, celle-ci délimitant autour de la couronne deux zones périphériques de sections variables, et deux zone intermédiaires à perte de charge élevée de façon à empêcher les flux parasites de contournement du réacteur thermique, et l'on peut disposer des joints d'isolement entre la cage et la couronne.

Suivant un mode de réalisation, la couronne est divisée en plusieurs zones angulaires par un cloisonnement intérieur (8), chacune de ces zones étant garnie, extérieurement au lit catalytique, d'une charge en vrac d'un matériau à grande surface d'échange thermique. La couronne peut comporter aussi une pluralité de chambres parallélépipédiques pour contenir la charge à grande surface d'échange thermique.

Cette charge à grande surface d'échange thermique est constituée par exemple de matelas métalliques tricotés, tissés ou aiguilletés, de blocs de cailloux, d'une structure alvéolaire ou à partir de tournures ou copeaux d'usinage.

La couronne et la cage comportent chacune une paroi terminale supérieure et une paroi terminale inférieure, et de préférence des éléments d'étanchéité disposés entre les parois correspondantes, tels que des balais ou bavettes. L'étanchéité haute et basse est facile à assurer du fait que la température y est relativement basse.

Le dispositif peut aussi comporter des moyens d'injection dans une zone intermédiaire entre les zones d'introduction et d'évacuation d'un flux de gaz de purge.

Le procédé d'épuration en continu selon l'invention est caractérisé en ce qu'il comporte l'établissement d'une circulation permanente d'effluents à épurer d'une part entre des conduits d'amenée et d'autre part des conduits d'évacuation au travers d'une couronne tournante pourvue d'un cloisonnement intérieur et contenant au moins un lit catalytique annulaire disposé contre sa paroi intérieure et une charge d'un matériau présentant une grande surface d'échange thermique disposée dans la couronne extérieurement au lit catalytique, de façon que les effluents traversent la charge tournante et se réchauffent à son contact dans une première zone d'échange thermique et, après une double traversée du lit catalytique tournant et incinération, qu'ils réchauffent la masse thermique dans une deuxième zone d'échange thermique.

Avec le procédé selon l'invention on parvient à incinérer les substances polluantes à une température de l'ordre de 400 à 500°C seulement, ce qui simplifie la conception et diminue les contraintes techniques ainsi que le coût de fabrication.

D'autres caractéristiques et avantages du dispositif perfectionné selon l'invention, apparaîtront à la lecture de la description ci-après d'exemples non limitatifs de réalisation, en se référant à :
- la Fig.1 qui montre schématiquement en coupe un mode de réalisation du dispositif, dans un usage mixte d'incinérateur de substances polluantes dans des effluents, et d'échangeur de chaleur; et
- la Fig.2 qui montre une variante de réalisation des moyens de régulation de la température du réacteur catalytique.

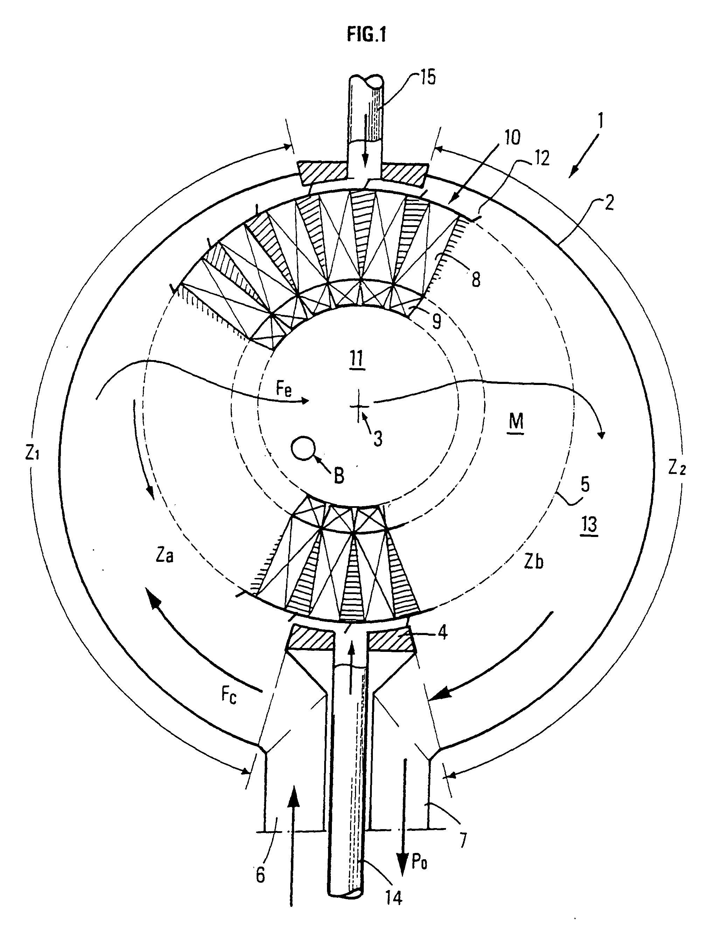

Le dispositif comporte (Fig.1) un tambour constitué d'une couronne 1 à axe vertical disposée à l'intérieur d'une enveloppe ou cage extérieure métallique 2, de forme cylindrique par exemple. Le diamètre de la cage ou enveloppe 2 est supérieur à celui de la couronne 1. Celle-ci est décentrée par rapport à la cage 2. De part et d'autre du plan diamétral contenant l'axe vertical 3 de la couronne, et suivant un secteur angulaire limité, la cage 2 comporte une portion de paroi latérale 4 sensiblement tangente à la paroi latérale de la couronne 5. L'espace intérieur de la cage autour de la couronne, 1 de part et d'autre de la portion de paroi 4 comporte ainsi deux zones arrondies de section variable Za et Zb. Elles communiquent respectivement avec un conduit 6 d'amenée des effluents gazeux à épurer, et un conduit 7 d'évacuation de ces mêmes effluents après épuration.

La couronne 1 est pourvue d'un cloisonnement intérieur constitué de plaques radiales droites 8 régulièrement réparties. Un premier secteur angulaire Z1 délimité par une ou plusieurs de ces plaques radiales 8, canalise les effluents à épurer introduits dans la zone convergente Za vers la zone centrale 11 de la couronne (flux Fe). Un deuxième secteur angulaire Z2 fait communiquer la zone centrale 11 de la couronne avec la zone divergente Zb et avec le conduit d'évacuation 7 (flux Fs).

La paroi intérieure de la couronne est tapissée tout autour d'un lit catalytique annulaire 9 que les effluents doivent traverser pour gagner la zone centrale réactive 11. Ce lit catalytique 9 est constitué soit d'un lit de particules, soit de préférence d'un catalyseur en nid d'abeille, ce qui permet, toutes choses égales par ailleurs, d'en diminuer l'épaisseur et le volume, et surtout de diminuer la perte de charge qu'il engendre.

Dans la partie de la couronne restante, extérieurement à ce lit catalytique, entre les plaques de cloisonnement 8, est répartie une masse active M constituée d'un matériau à grande surface d'échange thermique. Il peut s'agir de billes en céramique ou métalliques, de tournures ou copeaux d'usinage, de garnissage en vrac ou structuré, d'une structure alvéolaire à alvéoles régulières ou irrégulières telles que des nids d'abeille, de matelas métalliques ou céramiques tricotés tissés ou aiguilletés etc. On utilise avantageusement une structure alvéolaire telle que celle décrite dans le brevet FR 2 564 037 du demandeur. Cette masse grande surface d'échange thermique peut aussi être constituée de cailloux.

Pour faciliter la construction et le chargement, la couronne peut être agencée aussi pour servir de support à un certain nombre de paniers parallélépipédiques 10 séparés les uns des autres, comme représenté sur la Fig.1.

Dans le plan diamétral contenant l'axe 3 de la couronne 1, l'étroitesse de l'espace restant entre elle et la cage 2 du fait de son excentrement et de l'avancée de paroi 4, crée un perte de charge suffisante pour empêcher les communications périphériques directes entre les deux espaces en amont et en aval Za et Zb, autrement qu'au travers de la zone centrale 11. Des joints ou bavettes 12 peuvent être éventuellement placés à la périphérie de la couronne où la température est relativement basse, pour parfaire l'étanchéité.

La couronne et la cage sont fermées à leurs parties inférieures et supérieures par des plaques planes 13. Entre les plaques correspondantes de la couronne et de la cage, plusieurs balais (non représentés) en appui simultané, empêchent les flux parasites de contournement entre les zones Za et Zb.

Des moyens moteurs (non représentés) disposés au-dessus de la cage par exemple, sont couplés avec l'axe 3 de la couronne, pour l'entraîner en rotation par rapport à la cage 2.

Le secteur angulaire intermédiaire délimité par la portion de paroi 4 de la cage, comporte de préférence un conduit 14 pour une injection d'air frais destinée à purger les effluents viciés au travers de la masse thermique et le catalyseur dans les quelques secteurs angulaires de la couronne passant devant elle, avant chaque inversion du sens du flux. La masse d'air de purge après traversée des secteurs purgés, se retrouve dans la zone centrale 11 où elle est entraînée avec le flux principal vers la zone Zb au travers de la couronne 1.

Dans le secteur angulaire opposé au conduit 14, la cage comporte un autre conduit 15 (Fig. 1) pour une injection d'air frais destiné à réguler éventuellement la température de la réaction catalytique si elle s'élève trop.

La réaction qui a lieu dans la zone centrale, est exothermique et elle est réglée de façon à dégager suffisamment d'énergie pour compenser sensiblement la dissipation calorifique. Une proportion de 0,4 g de COV par m3 d'effluents suffit pour un fonctionnement autothermique.

Un brûleur (B) alimenté en gaz naturel ou en GPL, est disposé au-dessus de la zone centrale 11 par exemple, sa flamme pénétrant directement dans la zone centrale. On l'utilise pour chauffer au démarrage si nécessaire les effluents entrants, de façon à atteindre un point de fonctionnement auto-thermique, ou éventuellement pour faire un appoint thermique dans le cas où la teneur en composés polluants COV est insuffisante pour obtenir un fonctionnement autothermique.

Suivant le mode de réalisation de la Fig. 1, le contrôle de la température dans le réacteur catalytique est assuré séparément par un brûleur B aud-dessus de la couronne et par un conduit radial 15 amenant des effluents frais.

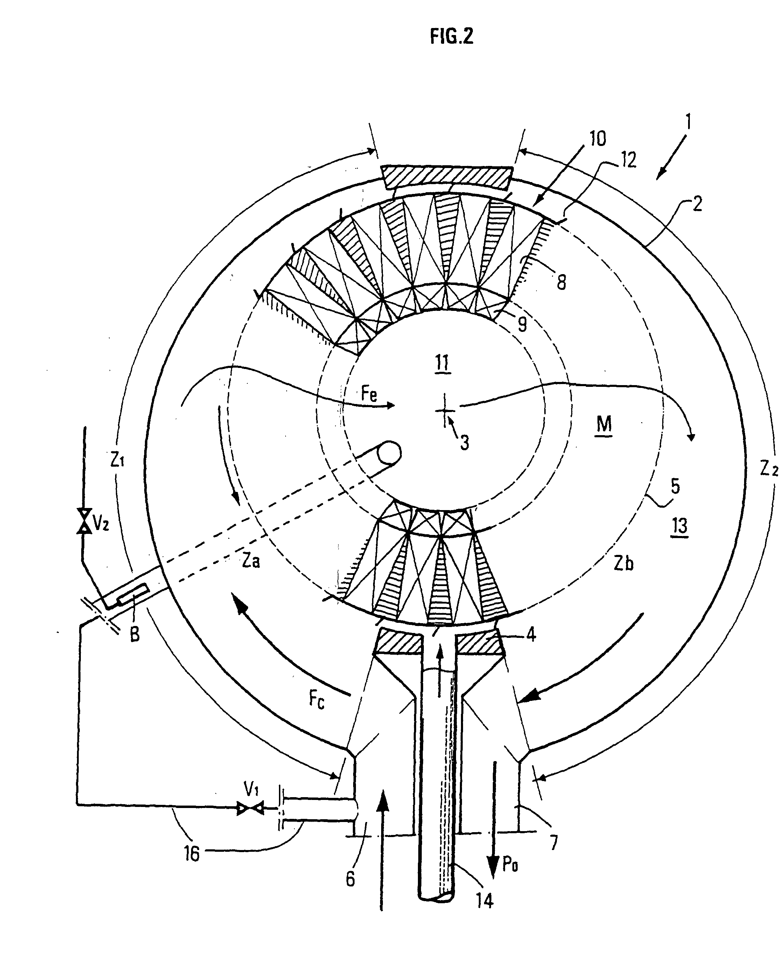

Suivant le mode de réalisation de la Fig. 2, le brûleur B au lieu de se trouver directement au-dessus de la zone centrale 11, peut être disposé dans un conduit 16 débouchant dans cette zone. Le conduit 16 peut être branché en dérivation sur le conduit 6 d'amenée des effluents à traiter. Le débit dérivé par ce conduit 16 est contrôlé par une vanne V1. Le brûleur B est alimenté en combustible par l'intermédiaire d'une vanne de contrôle V2. En faisant varier le débit d'effluents dérivés par le conduit 16 et sa température au moyen du brûleur B, on peut contrôler la réaction exothermique dans le réacteur. Si la concentration en substances polluantes dépasse la limite d'autothermicité, on injecte des effluents froids. Si au contraire, cette concentration reste en deça de cette limite et aussi en période de démarrage de l'installation, on alimente le brûleur.

Après leur double passage au travers du lit catalytique, de part et d'autre de la zone centrale 11, les composés polluants (COV) se trouvent transformés par la réaction en produits de combustion divers : CO2, H2O, N2 principalement, SOx et NOx à l'état de traces.

Les gaz à température élevée issus de la zone réactive traversent la partie de la charge M située dans la zone angulaire z2 de la couronne et lui cèdent une bonne partie de leurs calories. La rotation de la couronne 1 relativement à la cage 2, amène progressivement les éléments chauffés vers la zone angulaire Z1 où ils peuvent céder à leur tour aux gaz entrants par le conduit d'amenée 6, une partie de l'énergie calorifique accumulée.

L'agencement du mode de réalisation qui vient d'être décrit, avec sa couronne tournante à lit catalytique et charge thermique disposée concentriquement permet, par rapport aux modes de réalisation antérieurs, une diminution du volume global entre 8% et 27% et du poids de matière entre 6% et 32%, selon le débit horaire d'effluents traités (entre 3000 m3 et 130.000 m3). De même, toujours selon le débit horaire, le volume de catalyseur qu'il est possible de charger peut augmenter de 20 à 60%. Ces variations ont une influence considérable sur les coûts.

Des essais menés pour une installation pilote capable de traiter 3000 m³/h d'air pollué par du xylène, ont conduit aux résultats suivants :
- efficacité thermique 95%
- taux limite permettant une autothermicité de l'oxydation catalytique 0,6 g/Nm³
- efficacité d'épuration 99,2 %

## Revendications

1. Dispositif rotatif d'épuration catalytique d'effluents gazeux pollués, comportant une enveloppe ou cage (2), une couronne (1) disposée à l'intérieur de la cage, contenant une masse, et des moyens moteurs pour animer la couronne d'un mouvement de rotation relativement à la cage autour d'un axe vertical (3), au moins un conduit (6) pour l'introduction d'effluents dans la cage (2) et au moins un conduit (7) pour l'évacuation d'effluents hors de la cage, la couronne (1) comportant au moins une premier secteur (Z1) pour faire communiquer à tout instant le conduit d'introduction (6) avec la partie centrale (11) de la cage (2), et au moins un deuxième secteur (Z2) de la couronne pour faire communiquer à tout instant la partie centrale (11) de la cage avec les circuits d'évacuation, et un réacteur d'épuration catalytique (R) pour brûler les substances polluantes mêlées aux effluents canalisés par la première zone angulaire, **caractérisé en ce que** le réacteur catalytique comporte au moins un lit catalytique (9) disposé contre la paroi intérieure de la couronne (1) sur tout son pourtour, et tournant avec elle.

2. Dispositif selon la revendication 1, **caractérisé en ce que** la couronne (1) est excentrée à l'intérieur de la cage (2), celle-ci délimitant autour de la couronne deux zones périphériques (Za, Zb) de sections variables, et deux zone intermédiaires à perte de charge élevée de façon à empêcher les flux parasites de contournement du réacteur thermique (R).

3. Dispositif selon l'une des revendications 1 ou 2, **caractérisé en ce qu'**il comporte des joints d'isolement (12) disposés entre la cage (2) et la couronne (1).

4. Dispositif selon l'une des revendications précédentes, **caractérisé en ce qu'**il comporte une charge (M) d'un matériau présentant une grande surface d'échange thermique disposée dans la couronne extérieurement au lit catalytique (9).

5. Dispositif selon l'une des revendications précédentes, **caractérisé en ce que** le réacteur thermique (R) comporte des moyens de chauffage communiquant avec la zone centrale de la couronne.

6. Dispositif selon la revendication précédente, **caractérisé en ce que** les moyens pour élever la température comportent un brûleur extérieur disposé au-dessus de la zone centrale (11) de la couronne (1).

7. Dispositif selon l'une des revendications précédentes, **caractérisé en ce que** la couronne est divisée en plusieurs zones angulaires par un cloisonnement intérieur (8), chacune de ces zones étant garnie, extérieurement au lit catalytique, d'une charge en vrac d'un matériau à grande surface d'échange thermique.

8. Dispositif selon l'une des revendications 1 à 6, **caractérisé en ce que** la couronne comporte une pluralité de chambres parallélépipédiques (10) pour contenir la charge à grande surface d'échange thermique (M).

9. Dispositif selon l'une des revendications précédentes, **caractérisé en ce que** la couronne et la cage comportent chacune une paroi terminale supérieure et une paroi terminale inférieure, et des éléments d'étanchéité disposés entre les parois correspondantes.

10. Dispositif selon l'une des revendications précédentes, **caractérisé en ce qu'**il comporte des moyens d'injection dans une zone intermédiaire entre les zones d'introduction et d'évacuation (Za, Zb) d'un flux de gaz de purge.

11. Dispositif selon l'une des revendications précédentes, **caractérisé en ce qu'**il comporte des moyens d'injection dans une zone intermédiaire entre les zones d'introduction et d'évacuation (Za, Zb) d'un flux de gaz frais de régulation de température.

12. Procédé d'épuration en continu d'effluents gazeux chargés de substances polluantes par incinération catalytique, **caractérisé en ce qu'**il comporte: l'établissement d'une circulation permanente d'effluents à épurer d'une part entre des conduits (6) d'amenée et d'autre part des conduits (7) d'évacuation au travers d'une couronne tournante (1) pourvue d'un cloisonnement intérieur (8) et contenant au moins un lit catalytique annulaire disposé contre sa paroi intérieure de façon que les effluents traversent deux fois le lit catalytique tournant, de part et d'autre de la zone centrale de la couronne.

13. Procédé selon la revendication 12, **caractérisé en ce que**, la couronne (1) contenant une masse (M) d'un matériau possédant une grande surface d'échange thermique, un réchauffement des effluents par la masse (M) avant leur double traversée du lit catalytique, dans une première zone d'échange thermique (Za) et un réchauffement de la masse thermique dans une deuxième zone d'échange thermique au contact des effluents incinérés après leur double traversée du lit catalytique tournant (9).

## Claims

1. Rotary device for catalytic scrubbing of polluted gaseous effluents, including a casing or case (2), a ring (1) arranged inside the case, containing a mass, and drive means to impart a rotary motion to the ring relative to the case about a vertical axis (3), at least one conduit (6) for introduction of effluents into the case (2) and at least one conduit (7) for evacuation of effluents from the case, the ring (1) including at least a first sector (Z1) for causing the introduction conduit (6) to communicate at any moment with the central part (11) of the case (2) and at least a second sector (Z2) of the ring to cause the central part (11) of the case to communicate at any moment with the evacuation circuits, and a catalytic scrubbing reactor (R) to burn the polluting substances mixed with the effluents channelled by the first angular zone, ***characterised by** the fact that* the catalytic reactor includes at least one catalytic bed (9) arranged against the inner wall of the ring (1) around the whole of its periphery, and rotating with it.

2. Device as described in claim 1, ***characterised by** the fact that* the ring (1) is eccentric within the case (2), the latter defining around the ring two peripheral zones (Za, Zb) of variable sections, and two intermediate zones with high loss of pressure so as to prevent parasitic flows circumventing the thermal reactor (R).

3. Device as described in one of claims 1 or 2, ***characterised by** the fact that* it includes isolating seals (12) arranged between the case (2) and the ring (1).

4. Device as described in one of the preceding claims, ***characterised by** the fact that* it includes a filling (M) of a material with a large heat-exchange surface arranged in the ring externally of the catalytic bed (9).

5. Device as described in one of the preceding claims, ***characterised by** the fact that* the thermal reactor (R) includes heating means communicating with the central zone of the ring.

6. Device as described in the preceding claim, ***characterised by** the fact that* the means for raising the temperature include an external burner arranged over the central zone (11) of the ring (1).

7. Device as described in one of the preceding claims, ***characterised by** the fact that* the ring is divided into a plurality of angular zones by internal partitioning (8), each of these zones being provided, externally of the catalytic bed, with a bulk filling of a material with a large heat-exchange surface.

8. Device as described in one of claims 1 to 6, ***characterised by** the fact that* the ring includes a plurality of parallelepipedal chambers (10) to contain the filler with a large heat-exchange surface (M).

9. Device as described in one of the preceding claims, ***characterised by** the fact that* the ring and the case each include an upper end wall and a lower end wall, and sealing elements arranged between the corresponding walls.

10. Device as described in one of the preceding claims, ***characterised by** the fact that* it includes means for injection into an intermediate zone between the introduction and evacuation zones (Za, Zb) of a flow of purging gas.

11. Device as described in one of the preceding claims, ***characterised by** the fact that* it includes means for injection into an intermediate zone between the introduction and evacuation zones (Za, Zb) of a flow of cool gas for temperature regulation.

12. Process for continuous scrubbing of gaseous effluents charged with polluting substances by catalytic incineration, ***characterised by** the fact that* it includes: establishing a continuous circulation of effluents to be scrubbed on the one hand between supply conduits (6) and on the other evacuation conduits (7) through a rotating ring (1) provided with internal partitioning (8) and containing at least an annular catalytic bed arranged against its inner wall so that the effluents pass twice through the rotating catalytic bed, on either side of the central zone of the ring.

13. Process as described in claim 12, ***characterised by** the fact that,* the ring (1) containing a mass (M) of a material having a large heat-exchange surface, heating of the effluents by the mass (M) before their double passage through the catalytic bed, in a first heat exchange zone (Za) and heating of the thermal mass in a second heat-exchange zone in contact with the incinerated effluents after their double passage through the rotating catalytic bed (9).

## Patentansprüche

1. Drehbare Vorrichtung zur katalytischen Reinigung verunreinigter gasförmiger Abströme, umfassend: eine Hülle oder einen Käfig (2); eine kranzartige Ausbildung (1), die im Inneren des Käfigs angeordnet ist und eine Masse enthält; sowie Antriebsmittel zum Antrieb der kranzartigen Ausbildung mit einer Drehbewegung relativ zum Käfig um eine vertikale Achse (3); wenigstens eine Leitung (6) zum Einführen der Abströme in den Käfig (2) und wenigstens eine Leitung (7) zum Abziehen der Abströme aus dem Käfig, wobei das kranzartige Gebilde (1) wenigstens einen ersten Sektor (Z1), um in jedem Augenblick die Einführungsleitung (6) mit dem zentralen Teil (11) des Käfigs (2) zu verbinden und wenigstens einen zweiten Sektor (Z2) des kranzartigen Gebildes umfasst, um in jedem Augenblick den zentralen Teil (11) des Käfigs mit den Abzugskreisen zu verbinden; und einen Reaktor (R) zur katalytischen Reinigung, um die verunreinigenden Substanzen zu verbrennen, die mit den Abströmen vermischt sind, welche durch die erste Winkelzone kanalisiert werden, **dadurch gekennzeichnet, dass** der katalytische Reaktor wenigstens ein katalytisches Bett (9), das gegen die Innenwand des kranzartigen Gebildes über dessen gesamten Umfang angeordnet ist und sich mit diesem dreht, umfasst.

2. Vorrichtung nach Anspruch 1, **dadurch gekennzeichnet, dass** das kranzartige Gebilde (1) exzentrisch im Inneren des Käfigs (2) angeordnet ist, wobei dieses um das kranzartige Gebilde herum zwei Umfangszonen (Za, Zb) variablen Querschnitts und zwei Zwischenzonen mit erhöhtem Druckverlust derart begrenzt, dass die parasitären den thermischen Reaktor (R) umgehenden Ströme verhindert werden.

3. Vorrichtung nach einem der Ansprüche 1 oder 2, **dadurch gekennzeichnet, dass** sie isolierende Dichtungen (12) umfasst, die zwischen dem Käfig (2) und dem kranzartigen Gebilde (1) angeordnet sind.

4. Vorrichtung nach einem der vorhergehenden Ansprüche, **dadurch gekennzeichnet, dass** sie eine Charge aus einem Material mit einer großen Wärmeaustauscherfläche umfasst, die in dem kranzartigen Gebilde außerhalb des katalytischen Bettes (9) angeordnet ist.

5. Vorrichtung nach einem der vorhergehenden Ansprüche, **dadurch gekennzeichnet, dass** der thermische Reaktor (R) Heizmittel umfasst, die die Verbindung mit der zentralen Zone des kranzartigen Gebildes herstellen.

6. Vorrichtung nach dem vorhergehenden Anspruch, **dadurch gekennzeichnet, dass** die Mittel zur Temperaturerhöhung einen äußeren Brenner umfassen, der oberhalb der zentralen Zone (11) des kranzartigen Gebildes (1) angeordnet ist.

7. Vorrichtung nach einem der vorhergehenden Ansprüche, **dadurch gekennzeichnet, dass** das kranzartige Gebilde in mehrere Ringzonen für eine Innentrennung (8) unterteilt ist, wobei jede dieser Zonen außerhalb des katalytischen Bettes mit einer losen Charge aus einem Material großer Wärmeaustauscherfläche ausgekleidet ist.

8. Vorrichtung nach einem der Ansprüche 1 bis 6, **dadurch gekennzeichnet, dass** das kranzartige Gebildet eine Vielzahl parallelepipedförmiger Kammern (10) umfasst, welche die Charge von großer Wärmeaustauscherfläche (M) aufnehmen.

9. Vorrichtung nach einem der vorhergehenden Ansprüche, **dadurch gekennzeichnet, dass** das kranzartige Gebilde und der Käfig je eine obere Stirnwand und eine untere Stirnwand sowie Dichtungselemente, die zwischen den entsprechenden Wandungen angeordnet sind, umfassen.

10. Vorrichtung nach einem der vorhergehenden Ansprüche, **dadurch gekennzeichnet, dass** sie Mittel umfasst, die in eine Zwischenzone zwischen den Einführungs- und Abführungszonen (Za, Zb) einen Strom von Reinigungsgas einführen.

11. Vorrichtung nach einem der vorhergehenden Ansprüche, **dadurch gekennzeichnet, dass** sie Mittel umfassen, die in eine Zwischenzone zwischen den Einführungs- und Abführungszonen (Za, Zb) einen Strom frischen Temperatursteuerungsgases einführen.

12. Verfahren zur kontinuierlichen Reinigung von mit verunreinigenden Substanzen beladenen Abströmen, durch katalytische Veraschung, **dadurch gekennzeichnet, dass** sie den Aufbau einer permanenten Zirkulation von zu reinigenden Abströmen einerseits zwischen Zuführungen (6), andererseits Abführungsleitungen (7) quer durch eine sich drehende kranzartige Ausbildung (1) umfasst, das mit einer inneren trennenden Unterteilung (8) versehen ist und wenigstens ein ringförmiges katalytisches Bett enthält, das gegen ihre Innenwandung derart angeordnet ist, dass die Abströme zweimal das sich drehende katalytische Bett zu beiden Seiten der zentralen Zone des kranzartigen Gebildes durchsetzen.

13. Verfahren nach Anspruch 12, **dadurch gekennzeichnet dass** die kranzartige Ausbildung (1) eine Masse (M) aus einem Material enthält, welches eine große Wärmaustauscherfläche, ein Aufheizen der Abströme durch die Masse (M) vor ihrem doppelten Durchgang durch das katalytische Bett in einer ersten Wärmeaustauscherzone (Za) und eine Aufheizung der thermischen Masse in einer zweiten Wärmeaustauscherzone in Kontakt mit Abströmen besitzt, die nach ihrem doppelten Durchgang durch das sich drehende katalytische Bett (9) verascht werden.
